# EUROPEAN PATENT SPECIFICATION

(11) **EP 4 207 832 B1**
(45) Date of publication and mention of the grant of the patent: **10.06.2026**
(21) Application number: 22213297.9
(22) Date of filing: 13.12.2022
(51) Int. Cl.: H04W 4/44, H04W 4/80

(54) **INFORMATION PROCESSING DEVICE, INFORMATION PROCESSING METHOD, AND STORAGE MEDIUM**
INFORMATIONSVERARBEITUNGSVORRICHTUNG, INFORMATIONSVERARBEITUNGSVERFAHREN UND SPEICHERMEDIUM
DISPOSITIF DE TRAITEMENT D'INFORMATIONS, PROCÉDÉ DE TRAITEMENT D'INFORMATIONS ET SUPPORT D'INFORMATIONS

(30) Priority: 28.12.2021 JP 2021214958
(43) Date of publication of application: 05.07.2023
(60) Divisional application: 24152735.7
(73) Proprietor: TOYOTA JIDOSHA KABUSHIKI KAISHA, Aichi-Ken 471-8571 (JP)
(72) Inventor: YOSHIHARA, Toru, TOYOTA-SHI, AICHI-KEN, 471-8571 (JP)
(74) Representative: Cabinet Beau de Loménie

(56) References cited:
- US-A1- 2020 196 095

## Description

### BACKGROUND

### Technical Field

The present disclosure relates to an information processing device, an information processing method, and a non-transitory storage medium storing an information processing program, relating to communication between a portable information terminal and a vehicle.

### Related Art

Digital key technology has been developed in which a vehicle is locked and unlocked and, further, an engine of a vehicle is started, by operation from a portable information terminal such as a smartphone.

Japanese Patent Application Laid-open No. 2021-063428 discloses a technique whereby, when establishing a communication connection using Bluetooth low energy (BLE), which performs low power consumption communication between a portable information terminal and a vehicle, based on the position of the portable information terminal relative to the vehicle specified using ultra-wideband (UWB), which enables communication over an ultra-wideband, operations such as unlocking of a door or the trunk of the vehicle, and starting of the engine of the vehicle, are performed using BLE.

However, since the power consumption of the UWB is large, if the UWB is turned on for a long time in order to identify a positional relationship between the vehicle and the portable information terminal, there is a possibility of the power consumption of the vehicle increasing.
US 2020/0196095 A1 deals with a system and a method of calibration for establishing real-time location.

### SUMMARY

The present disclosure, in consideration of the foregoing circumstances, provides an information processing device, an information processing method, and a non-transitory storage medium storing an information processing program, that prevent an increase in electrical current consumption in a vehicle by operating a UWB module at a more appropriate timing.

A first aspect of the present disclosure is an information processing device as defined in claim 1, including: an electrical power-saving communication unit that performs electrical power-saving communication with a portable information terminal; an ultra-wideband communication unit that performs ultra-wideband communication with the portable information terminal; and a control unit that is configured to: correct a signal strength of the electrical power-saving communication received by the electrical power-saving communication unit based on a distance measurement between a vehicle and the portable information terminal calculated from a result of communication by the ultra-wideband communication unit that temporarily has been put into an on state, put the ultra-wideband communication unit into an on state and initiate distance measurement between the vehicle and the portable information terminal in a case in which the corrected signal strength is equal to or higher than an operation allowable threshold value, and enable control of the vehicle so as to perform at least one of locking, unlocking or engine starting of the vehicle in accordance with an operation signal obtained from the portable information terminal via the electrical power-saving communication unit.

According to the first aspect, in a case in which the signal strength of electrical power-saving communication, which has been corrected based on a distance measurement by an ultra-wideband communication unit that temporarily has been put into an on state, is equal to or greater than an operation allowable threshold value, distance measurement is initiated by the ultra-wideband communication unit. Therefore, the ultra-wideband communication unit, configured by a UWB module, may be operated at a more appropriate timing, which enables an increase in electrical current consumption in the vehicle to be prevented. Moreover, by performing at least one of locking, unlocking, or starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able be reliably performed via the electrical power-saving communication.

In the first aspect, the control unit may be configured to correct, based on a predetermined correlation between the distance measurement using ultra-wideband communication and the signal strength of the electrical power-saving communication, the signal strength of the electrical power-saving communication received by the electrical power-saving communication unit to a signal strength corresponding to the distance measurement using the ultra-wideband communication.

According to the foregoing configuration, the signal strength of the electrical power-saving communication may be corrected based on the correlation between the distance measurement performed by the ultra-wideband communication and the signal strength of the electrical power-saving communication.

In the first aspect, the control unit may be configured to: set a number of distance measurement attempts by the ultra-wideband communication unit to zero at a time of initiation of control, and correct the signal strength of the electrical power-saving communication based on the distance measurement by the ultra-wideband communication unit in a case in which the number of distance measurement attempts does not exceed one, and the signal strength of the electrical power-saving communication received by the electrical power-saving communication unit is equal to or greater than an electrical power-saving communication establishment threshold value, which is lower than the operation allowable threshold value.

According to the foregoing configuration, when a user holding a portable information terminal approaches the vehicle, the signal strength of the electrical power-saving communication may be corrected based on the distance measurement performed by the ultra-wideband communication unit.

In the first aspect, the control unit may be configured to correct the signal strength of the electrical power-saving communication each time a connection of the electrical power-saving communication is performed between the vehicle and the portable information terminal, and cancel the correction of the signal strength when the connection of the electrical power-saving communication is broken.

According to the foregoing configuration, by correcting the signal strength of the electrical power-saving communication each time the electrical power-saving communication is connected, correction is enabled that corresponds to the signal strength of electrical power-saving communication, which changes according to the manner in which a user holds the portable information terminal.

In the first aspect, the control unit may be configured to, after enabling control of the vehicle so as to perform at least one of locking, unlocking or engine starting of the vehicle by electrical power-saving communication, perform distance measurement between the vehicle and the portable information terminal based on the signal strength of the electrical power-saving communication.

According to the foregoing configuration, after operation of the vehicle via electrical power-saving communication has been enabled, the positional relationship between the vehicle and the portable information terminal may be identified via electrical power-saving communication with low power consumption.

A second aspect of the present disclosure that is not claimed is an information processing device, including: an electrical power-saving communication unit that performs electrical power-saving communication with a portable information terminal; an ultra-wideband communication unit that performs ultra-wideband communication with the portable information terminal; and a control unit that is configured to: correct an operation allowable threshold value based on a distance measurement between a vehicle and the portable information terminal calculated from a result of communication by the ultra-wideband communication unit that temporarily has been put into an on state, put the ultra-wideband communication unit into an on state and initiate distance measurement between the vehicle and the portable information terminal in a case in which a signal strength of the electrical power-saving communication received by the electrical power-saving communication unit is equal to or higher than the corrected operation allowable threshold value, and enable control of the vehicle so as to perform at least one of locking, unlocking or engine starting of the vehicle in accordance with an operation signal obtained from the portable information terminal via the electrical power-saving communication unit.

According to the second aspect, in a case in which a signal strength of electrical power-saving communication is equal to or higher than an operation allowable threshold that has been corrected based on a distance measurement performed by an ultra-wideband communication unit that temporarily has been put into an on state, distance measurement by the ultra-wideband communication unit is initiated. Therefore, the ultra-wideband communication unit, configured by a UWB module, may be operated at a more appropriate timing, which enables an increase in electrical current consumption in the vehicle to be prevented. Moreover, by enabling at least one of locking, unlocking, or starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able to be reliably performed via the electrical power-saving communication.

In the second aspect, the control unit may be configured to correct the operation allowable threshold value in accordance with a difference between a signal strength corresponding to the distance measurement by the ultra-wideband communication calculated based on a predetermined correlation between the distance measurement using the ultra-wideband communication and the signal strength of the electrical power-saving communication and a signal strength of the electrical power-saving communication received by the of the electrical power-saving communication unit.

According to the foregoing configuration, the operation allowable threshold value may be corrected based on a correlation between the distance measurement performed by ultra-wideband communication and the signal strength of the electrical power-saving communication.

In the second aspect, the control unit may be configured to: set a number of distance measurement attempts by the ultra-wideband communication unit to zero at a time of initiation of control, and correct the operation allowable threshold value in accordance with the difference in a case in which the number of distance measurement attempts does not exceed one with the signal strength of the electrical power-saving communication received by the electrical power-saving communication unit is equal to or greater than an electrical power-saving communication establishment threshold value, which is lower than the operation allowable threshold value.

According to the foregoing configuration, when a user holding a portable information terminal approaches the vehicle, the operation allowable threshold value may be corrected based on the distance measurement performed by the ultra-wideband communication unit.

In the second aspect, the control unit may be configured to correct the operation allowable threshold value each time a connection of the electrical power-saving communication is performed between the vehicle and the portable information terminal, and cancel the correction of the operation allowable threshold value when the connection of the electrical power-saving communication is broken.

According to the foregoing configuration, by correcting the operation allowable threshold value each time an electrical power-saving communication connection is performed, correction is enabled that corresponds to the signal strength of electrical power-saving communication, which changes according to the manner in which a user holds the portable information terminal.

In the second aspect, the control unit may be configured to, when enabling control of the vehicle so as to perform at least one of locking, unlocking or engine starting of the vehicle by electrical power-saving communication, clarify a positional relationship between the vehicle and the portable information terminal by the distance measurement by the ultra-wideband communication.

According to the foregoing configuration, when performing at least one of locking, unlocking, or starting the engine of a vehicle, a positional relationship between a vehicle and a portable information terminal is clarified and reliable operation is enabled.

A third aspect of the present disclosure is an information processing method as defined in claim 8, including: correcting a signal strength of electrical power-saving communication based on a distance measurement between a vehicle and a portable information terminal calculated from a result of communication by ultra-wideband communication that temporarily has been put into an on state, initiating distance measurement between the vehicle and the portable information terminal by the ultra-wideband communication in a case in which the corrected signal strength is equal to or higher than an operation allowable threshold value, and enabling control of the vehicle so as to perform at least one of locking, unlocking or engine starting of the vehicle in accordance with an operation signal transmitted from the portable information terminal by the electrical power-saving communication.

According to the third aspect, in a case in which a signal strength of electrical power-saving communication that has been corrected based on a distance measurement using ultra-wideband communication that temporarily has been put into an on state is equal to or greater than an operation allowable threshold value, distance measurement using ultra-wideband communication is initiated. Therefore, the ultra-wideband communication may be operated at a more appropriate timing, enabling an increase in electrical current consumption in the vehicle to be prevented. Moreover, by enabling at least one of locking, unlocking, or starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able to be reliably performed via the electrical power-saving communication.

A fourth aspect of the present disclosure that is not claimed is an information processing method, including: correcting an operation allowable threshold value based on a distance measurement between a vehicle and a portable information terminal calculated from a result of communication by ultra-wideband communication that temporarily has been put into an on state, initiating distance measurement between the vehicle and the portable information terminal by the ultra-wideband communication in a case in which a signal strength of electrical power-saving communication is equal to or higher than the corrected operation allowable threshold value, and enabling control of the vehicle so as to perform at least one of locking, unlocking or engine starting of the vehicle in accordance with an operation signal transmitted from the portable information terminal by the electrical power-saving communication.

According to the fourth aspect, in a case in which a signal strength of electrical power-saving communication is greater than or equal to an operation allowable threshold value that has been corrected based on a distance measurement using ultra-wideband communication that temporarily has been put into an on state, distance measurement using ultra-wideband communication is initiated. Therefore, the ultra-wideband communication may be operated at a more appropriate timing, which enables an increase in electrical current consumption in the vehicle to be prevented. Moreover, by enabling at least one of locking, unlocking, or starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able to be reliably performed via the electrical power-saving communication.

A fifth aspect of the present disclosure is a non-transitory storage medium storing a program executable by a computer to perform information processing as defined in claim 9, the information processing including: correcting a signal strength of electrical power-saving communication based on a distance measurement between a vehicle and a portable information terminal calculated from a result of communication by ultra-wideband communication that temporarily has been put into an on state, initiating distance measurement between the vehicle and the portable information terminal by the ultra-wideband communication in a case in which the corrected signal strength is equal to or higher than an operation allowable threshold value, and enabling control of the vehicle so as to perform at least one of locking, unlocking or engine starting of the vehicle in accordance with an operation signal transmitted from the portable information terminal by the electrical power-saving communication.

According to the fifth aspect, in a case in which a signal strength of electrical power-saving communication that has been corrected based on a distance measurement using ultra-wideband communication that temporarily has been put into an on state is equal to or greater than an operation allowable threshold value, distance measurement using ultra-wideband communication is initiated. Therefore, the ultra-wideband communication may be operated at a more appropriate timing, which enables an increase in electrical current consumption in the vehicle to be prevented. Moreover, by enabling at least one of locking, unlocking, or starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able to be reliably performed via the electrical power-saving communication.

A sixth aspect of the present disclosure that is not claimed is a non-transitory storage medium storing a program executable by a computer to perform information processing, the information processing comprising: correcting an operation allowable threshold value based on a distance measurement between a vehicle and a portable information terminal calculated from a result of communication by ultra-wideband communication that temporarily has been put into an on state, initiating distance measurement between the vehicle and the portable information terminal by the ultra-wideband communication in a case in which a signal strength of electrical power-saving communication is equal to or higher than the corrected operation allowable threshold value, and enabling control of the vehicle so as to perform at least one of locking, unlocking or engine starting of the vehicle in accordance with an operation signal transmitted from the portable information terminal by the electrical power-saving communication.

According to the sixth aspect, in a case in which a signal strength of electrical power-saving communication is greater than or equal to an operation allowable threshold value that has been corrected based on a distance measurement using ultra-wideband communication that temporarily has been put into an on state, distance measurement using ultra-wideband communication is initiated. Therefore, the ultra-wideband communication may be operated at a more appropriate timing, which enables an increase in electrical current consumption in the vehicle to be prevented. Moreover, by locking, unlocking, and starting the engine of the vehicle in accordance with an operation signal acquired from a portable information terminal via an electrical power-saving communication unit in a case in which the corrected signal strength of the electrical power-saving communication is equal to or greater than the operation allowable threshold value, the operation may be permitted only when an operation such as unlocking of a vehicle is able to be reliably performed via the electrical power-saving communication.

As described above, according to the information processing device, the information processing method, and the non-transitory storage medium storing the information processing program of the present disclosure, by operating the UWB module at a more appropriate timing, an increase in electrical current consumption in the vehicle may be prevented.

### BRIEF DESCRIPTION OF THE DRAWINGS

Fig. 1 is a block diagram illustrating an example of a configuration of an information processing device according to the present exemplary embodiment.
Fig. 2 is a block diagram illustrating an example of a specific configuration of an ECU.
Fig. 3 is an explanatory diagram illustrating a range across which communication is possible from a position centered on a UWB antenna and a BLE antenna provided in a vehicle.
Fig. 4 is a flowchart illustrating an example of processing performed by an ECU included in the information processing device according to the present exemplary embodiment.
Fig. 5 is a schematic diagram illustrating a case in which a portable information terminal is present at a point outside a UWB ranging execution area.
Fig. 6 is a schematic diagram illustrating results of BLE RSSI and UWB ranging respectively measured in a case in which the portable information terminal is present at the point illustrated in Fig. 5.
Fig. 7 is a schematic diagram illustrating the BLE RSSI with respect to the UWB ranging.

### DETAILED DESCRIPTION

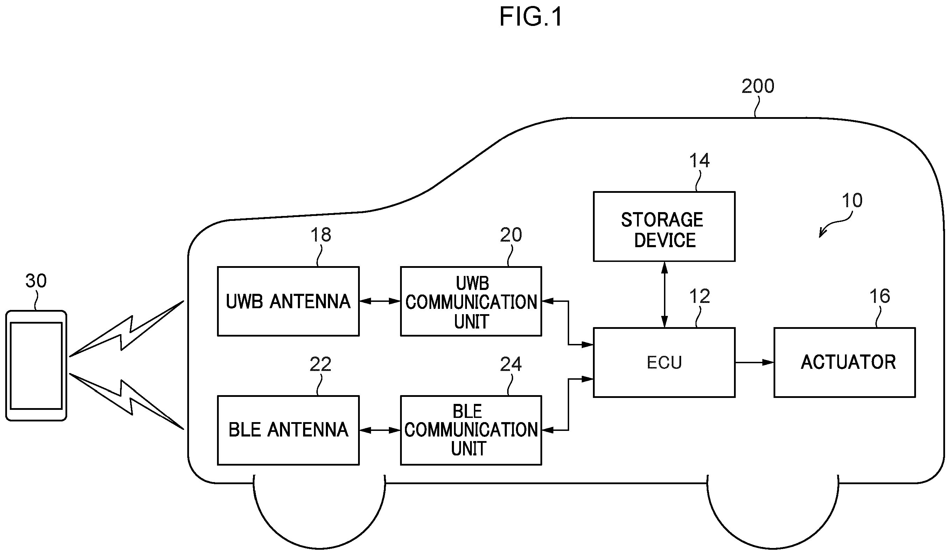

Explanation follows regarding an information processing device 10 according to the present exemplary embodiment. Fig. 1 is a block diagram illustrating an example of a configuration of an information processing device 10 installed in a vehicle 200. The information processing device 10 is configured by: a storage device 14 that stores data required for computation by an electronic control unit (ECU) 12, serving as a computation device, and the results of computation performed by the ECU 12; a UWB communication unit 20, which is an ultra-wideband (UWB) module that performs communication with a portable information terminal 30 via an ultra-wideband (UWB) antenna 18; a Bluetooth low energy (BLE) communication unit 24 that performs communication with the portable information terminal 30 via a Bluetooth low energy (BLE) antenna 22; and an actuator 16 that performs locking and unlocking of the vehicle 200, starting of an engine of the vehicle 200, and the like in accordance with a control signal input from the ECU 12. The ECU 12 is a type of computer, and performs distance measurement between the vehicle 200 and the portable information terminal 30 based on the results of communication processing by the UWB communication unit 20, and further, based on the results of communication processing by the BLE communication unit 24, generates and outputs a control signal to the actuator 16 in order to enable measurement of a received signal strength indicator (RSSI) of the BLE, and operation of unlocking and the like of the vehicle 200 in accordance with an instruction from the portable information terminal 30 by a user.

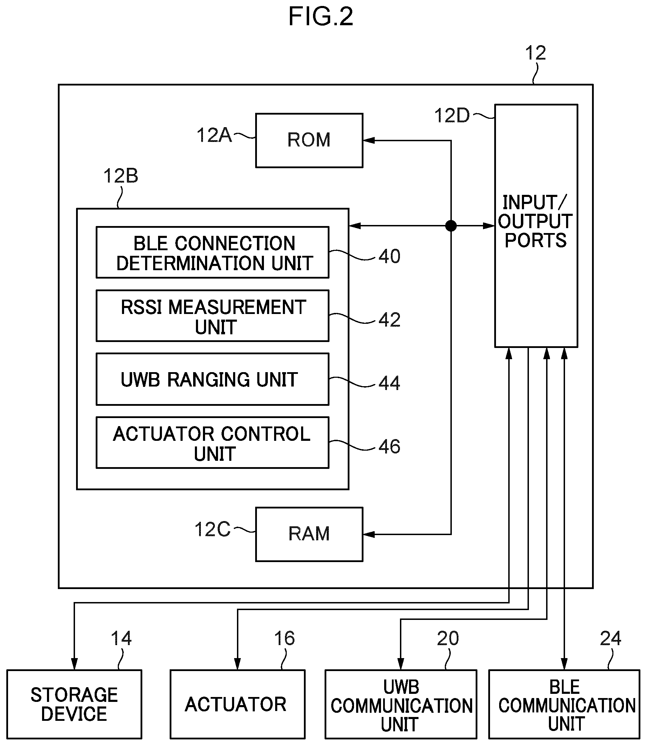

Fig. 2 is a block diagram illustrating an example of a specific configuration of the ECU 12. As illustrated in Fig. 2, the ECU 12 includes a central processing unit (CPU) 12B, read only memory (ROM) 12A, random access memory (RAM) 12C, and an input/output port 12D.

In the ECU 12, the CPU 12B, ROM 12A, RAM 12C, and input/output port 12D are connected together via various buses such as an address bus, a data bus, and a control bus. The input/output port 12D is connected to each of various input/output devices such as a storage device 14 configured by a non-volatile storage device such as a flash memory or a hard disk (HDD), an actuator 16, a UWB communication unit 20, and a BLE communication unit 24.

An information processing program is installed at the storage device 14 to perform distance measurement between the vehicle 200 and the portable information terminal 30 using the UWB (hereafter abbreviated as "UWB ranging") and to enable measurement of the BLE RSSI and operation of unlocking and the like of the vehicle 200 in accordance with communication from the portable information terminal 30 by BLE. In the present exemplary embodiment, the CPU 12B executes the information processing program to perform the above-described processing. While there are several methods for installing the information processing program of the present exemplary embodiment in the information processing device 10, the information processing program is stored, for example, together with a setup program on a CD-ROM, DVD, or the like, and the information processing program is installed in the storage device 14 by loading a disk in an input/output device such as a disk drive and executing a setup program at the CPU 12B. Alternatively, an information processing program may be installed in the storage device 14 by communicating with other information processing devices connected to the ECU 12 via a public telephone line or a network.

Next, explanation follows regarding various functions that are implemented by means of the CPU 12B of the ECU 12 executing an information processing program. The information processing program causes the CPU 12B to implement a BLE connection determination function that determines the state of a connection made by BLE with the portable information terminal 30, an RSSI measurement function that measures the BLE RSSI relative to the portable information terminal 30, a UWB ranging mechanism that performs UWB ranging, and an actuator control function for enabling operations such as unlocking of the vehicle 200 in accordance with communication from the portable information terminal 30 by BLE. The CPU 12B functions as a BLE connection determination unit 40, an RSSI measurement unit 42, a UWB ranging unit 44, and an actuator control unit 46 by executing the information processing program. While there are various methods for UWB ranging, as an example, the present exemplary embodiment adopts a time of arrival (TOA) method in which a pulse preparation time of a UWB signal transmitted from the information processing device 10 to the portable information terminal 30 via the UWB antenna 18 and/or transmitted from the portable information terminal 30 to the vehicle 200, and the measured pulse propagation time is multiplied by the speed of light to calculate a distance.

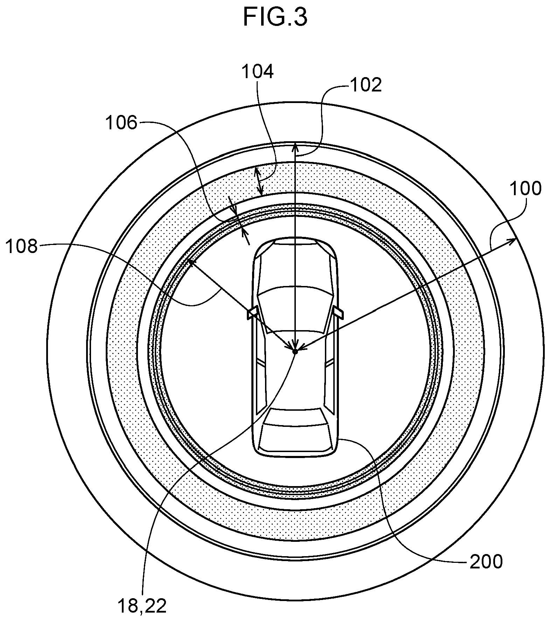

Fig. 3 is an explanatory diagram illustrating a range across which communication is possible from a position centered on the UWB antenna 18 and the BLE antenna 22 provided at the vehicle 200. A BLE connection area 100 indicates a range across which a BLE connection between the information processing device 10 and the portable information terminal 30 is possible. A UWB ranging enabled area 102 indicates a range across which UWB ranging is possible. A first threshold application area 104 indicates a range across which a first threshold value, described below, is applied in order to determine the BLE RSSI. A second threshold application area 106 indicates a range across which a second threshold value, described below, is applied in order to determine the BLE RSSI. A UWB ranging execution area 108 indicates a range across which UWB ranging is desired to be executed.

As an example, in a case in which electrical power saving is prioritized in BLE, the communication range is approximately 5m, and therefore, the radius of the BLE connection area 100 illustrated in Fig. 3 is also taken to be approximately 5m.

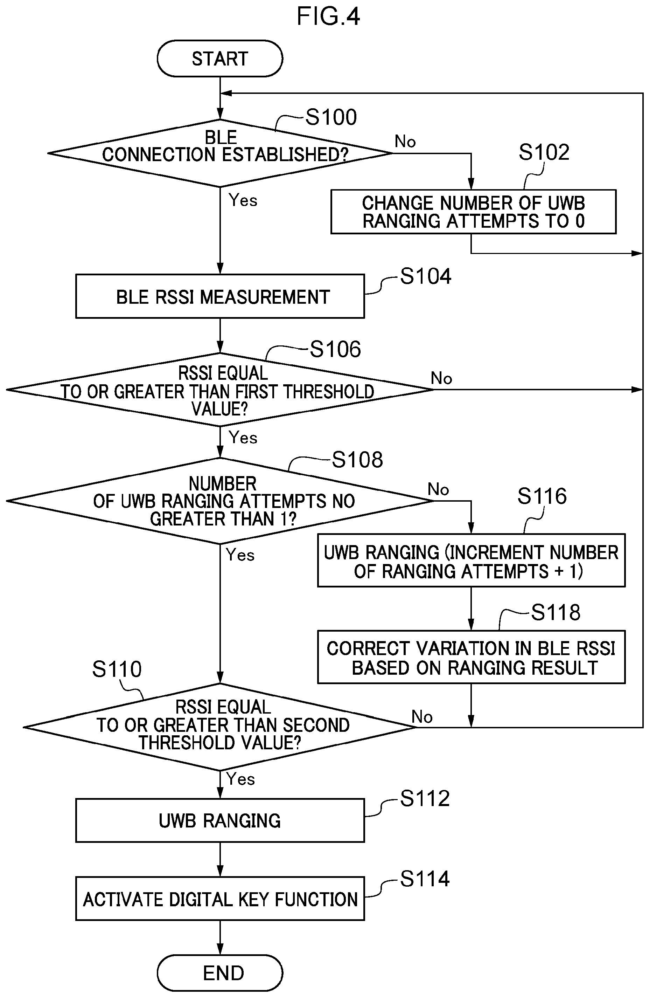

As described above, differences (variations) in the BLE RSSI are likely to arise owing to the manner in which a user is gripping and holding the portable information terminal 30 provided for communication, the characteristics of respective models of the portable information terminal 30, individual differences in individual products of the portable information terminal 30, and the like. In the present exemplary embodiment, as illustrated in Fig. 4, first, UWB ranging is performed in a case in which the BLE RSSI is equal to or greater than a predetermined first threshold value, and based on the results of the UWB ranging, the RSSI detected by BLE is corrected so as to enable locking, unlocking, and the like of the vehicle 200 by the BLE to be reliably performed.

Fig. 4 is a flowchart illustrating an example of processing performed by the ECU 12 included in the information processing device 10 according to the present exemplary embodiment. The processing illustrated in Fig. 4 is started when a portable information terminal 30 provided with digital key functionality approaches the vehicle 200.

At step S100, it is determined whether or not there is a BLE connection between the vehicle 200 and the portable information terminal 30. Specifically, in a case in which a BLE signal is constantly being transmitted from the portable information terminal 30, the information processing device 10 receives this signal and determines whether or not there is a BLE connection. At step S100, in a case in which the portable information terminal 30 is present within the BLE connection area 100 illustrated in Fig. 3, it is determined that there is a BLE connection. In a case in which it is determined at step S100 that there is a BLE connection, the procedure transitions to step S104, and in a case in which the BLE signal has been received but it is determined that there is no BLE connection owing to a weak BLE RSSI, or the like, the procedure transitions to step S102.

At step S102, the number of UWB ranging attempts is changed to 0, and thereby the number of UWB ranging attempts is reset.

At step S104, the BLE RSSI is measured, and at step S106, it is determined whether or not the RSSI measured at step S104 is equal to or greater than a first threshold value. The first threshold value is determined based on the RSSI measured in a case in which the portable information terminal 30 is present in the first threshold application area 104 illustrated in Fig. 3. As illustrated in Fig. 3, the first threshold application area 104 is a range that is closer to the vehicle 200 than the UWB ranging enabled area 102, which is a range across which UWB ranging is possible, and is farther from the vehicle 200 than the second threshold application area 106, which is a range across which a second threshold value is applied. Accordingly, the second threshold value is larger than the first threshold value.

At step S106, in a case in which it is determined that the RSSI is equal to or greater than the first threshold value, the procedure transitions to step S108, while in a case in which it is determined that the RSSI is not equal to or greater than the first threshold value, the procedure transitions to step S100.

At step S108, it is determined whether or not the number of UWB ranging attempts has exceeded 1. In a case in which it is determined at step S108 that the number of UWB ranging attempts has exceeded 1, the procedure transitions to step S110, and in a case in which it is determined that the number of UWB ranging attempts has not exceeded 1, the procedure transitions to step S116.

At step S110, it is determined whether or not the BLE RSSI measured at step S104 is equal to or greater than the second threshold value. The second threshold value is determined based on the RSSI measured in a case in which the portable information terminal 30 is present in the second threshold application area 106 illustrated in Fig. 3. In the present exemplary embodiment, as illustrated in Fig. 3, the second threshold application area 106 includes the outer edge of the UWB ranging execution area 108, which is the range across which UWB ranging is desired to be executed. Therefore, the second threshold value may be determined based on the RSSI measured in a case in which the portable information terminal 30 is present near the outer edge of the UWB ranging execution area 108.

At step S110, in a case in which it is determined that the RSSI is equal to or greater than the second threshold value, the procedure transitions to step S112, while in a case in which it is determined that the RSSI is not equal to or greater than the second threshold value, the procedure transitions to step S100.

At step S112, the UWB communication unit 20 is put into an on state and UWB ranging is performed. UWB is not compatible with electrical power-saving communication such as BLE and, therefore, consumes a large amount of power. On the other hand, the ranging accuracy is high. In the present exemplary embodiment, in a case in which the BLE RSSI exceeds the second threshold value and digital key operation, such as locking and unlocking of the vehicle 200, is reliably enabled, UWB ranging is performed and the positional relationship between the vehicle 200 and the portable information terminal 30 is clarified. The result of the UWB ranging at step S112 may be recorded as a log in the storage device 14, for example.

At step S114, the digital key function is put into an operable state, and the series of processing illustrated in Fig. 4 is ended. After the digital key function has been made operable at step S114, the ECU 12 controls the actuator 16 so as to perform locking, unlocking, engine starting, and the like of the vehicle 200 in accordance with the operation of the portable information terminal 30 by the user. A history of locking, unlocking, and engine starting of the vehicle 200 by user operation may be recorded as a log in the storage device 14.

In a case in which it is determined at step S108 that the number of UWB ranging attempts has not exceeded 1, the UWB communication unit 20 is put into an on state at step S116 and UWB ranging is performed. Also, the number of UWB ranging attempts is incremented by 1. After the UWB ranging at step S116, the UWB communication unit 20 is put into an off state in order to suppress power consumption.

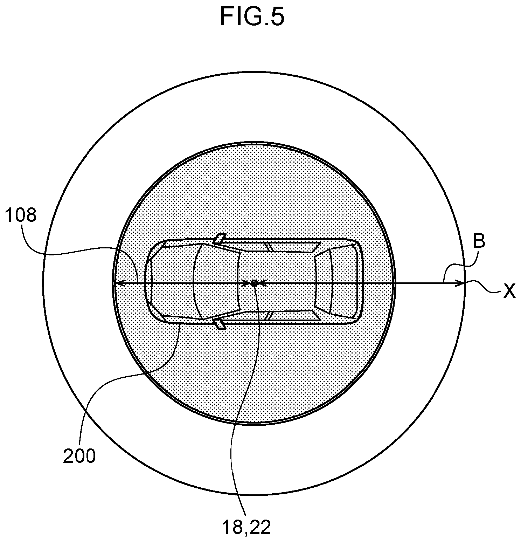

At step S118, based on the UWB ranging results at step S116, variations in the BLE RSSI are corrected. When correcting variation in the BLE RSSI, a situation such as that illustrated in Fig. 5, for example, is assumed. Fig. 5 illustrates a case in which the portable information terminal 30 is present at a point X at a distance B from the UWB antenna 18, outside the UWB ranging execution area 108. The BLE RSSI and the UWB ranging respectively measured in a case in which the portable information terminal 30 is present at the point X illustrated in Fig. 5 are as follows.
Theoretical value (ideal value) of BLE RSSI measurement: A (dBm)
Theoretical value (ideal value) of UWB ranging: B (mm)
Variation in BLE RSSI measurement: ±a (dBm)
Variation in UWB ranging: ±b (mm)

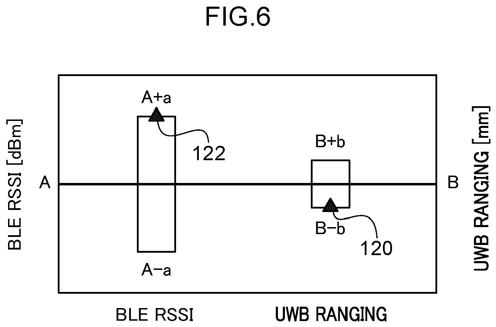

Fig. 6 is a schematic diagram illustrating the results of BLE RSSI and UWB ranging respectively measured in a case in which the portable information terminal 30 is present at the point X illustrated in Fig. 5. While the theoretical value for the BLE RSSI measurement is A and the theoretical value for UWB ranging is B, an error has arisen in a range of ±b for the actual measurement value 120 of UWB ranging and in a range of ±a for the actual measurement value 122 of the BLE RSSI. As described above, variations in the BLE RSSI are likely to arise owing to the manner in which a user is gripping and holding the portable information terminal 30 provided for communication, the characteristics of respective models of the portable information terminal 30, individual differences in individual products of the portable information terminal 30, and the like. However, the UWB has a relatively narrow range of ranging variation, and a relatively reliable ranging result may be obtained even in a case in which the portable information terminal 30 is present at the point X illustrated in Fig. 5.

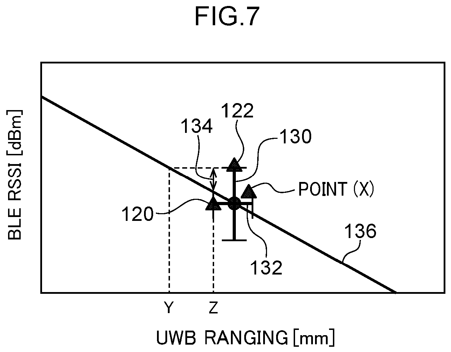

Fig. 7 is a schematic diagram illustrating the BLE RSSI with respect to the UWB ranging. In Fig. 7, the BLE RSSI indicates a variation 130 of ±a, and the UWB ranging indicates a variation 132 of ±b. Although the RSSI does not change linearly with distance, in Fig. 7, the scale of the horizontal axis is adjusted so that the BLE RSSI shows a straight line 136 with respect to the distance of UWB ranging.

In a case in which the BLE RSSI at the point X illustrated in Fig. 5 is the actual measurement value 122, if ranging is performed between the vehicle 200 and the portable information terminal 30 using only the actual measurement value 122 of the RSSI of the BLE, the distance Y between the vehicle 200 and the portable information terminal 30 is established. However, since the BLE RSSI measured at the point X may generate an error within the relatively large range of ±a, the ranging accuracy is not favorable.

Further, in a case in which the result of the UWB ranging at the point X illustrated in Fig. 5 is the actual measurement value 120, the UWB ranging indicates a distance Z. Since UWB ranging is more accurate than ranging based on the BLE RSSI as described above, at step S118, a difference 134 between the BLE RSSI value on the straight line 136 when the horizontal axis indicates the distance Z, and the actual measurement value 122, is set as the correction value of the BLE RSSI. By correcting for variation in the BLE RSSI, the BLE RSSI is corrected to a signal strength corresponding to the UWB ranging, and then the procedure transitions to step S100.

After correcting for variation in the BLE RSSI at step S118, the procedures of steps S100 to S114 are executed, and the processing is ended.

The correction value set at step S118 is initialized when the BLE connection is broken, and the correction of the BLE RSSI is canceled. When the user holding the portable information terminal 30 approaches the vehicle 200 anew, the processing illustrated in Fig. 4 is executed, and a new correction value for the BLE RSSI is set. As described above, the BLE RSSI varies in accordance with the manner in which a user is gripping and holding the portable information terminal 30 provided for communication, the characteristics of respective models of the portable information terminal 30, individual differences in individual products of the portable information terminal 30, and the like. Therefore, it is effective to set a correction value each time a BLE connection is established between the vehicle 200 and the portable information terminal 30.

Although the BLE RSSI is corrected at step S118 in the present exemplary embodiment, there is no limitation thereto. Instead of the BLE RSSI, the second threshold value or each of the first and second threshold values may be corrected. In the case illustrated in Fig. 7, the BLE RSSI is corrected by subtracting the difference 134 illustrated in Fig. 7 from the actual measurement value 122 of the BLE RSSI. In the case illustrated in Fig. 7, when each of the first threshold value and the second threshold value is corrected, processing such as adding the difference 134 to each of the first threshold value and the second threshold value enables each of the first threshold value and the second threshold value to be corrected in accordance with the difference 134.

In both cases in which the BLE RSSI has been corrected, and in which the second threshold value or each of the first threshold value and the second threshold value has been corrected, the result is that control that ensures the reliability of digital key operation by BLE is enabled. In addition, by operating the UWB communication unit 20 at a more appropriate timing, an increase in electrical current consumption in the vehicle 200 may be prevented. In a case in which the second threshold value or each of the first threshold value and the second threshold value has been corrected, each time a BLE connection is established between the vehicle 200 and the portable information terminal 30, the second threshold value or each of the first threshold value and the second threshold value is newly corrected, and the correction is canceled when the BLE connection is broken.

As described above, according to the present exemplary embodiment, by correcting the BLE RSSI, which is highly variable, the second threshold value, or the like based on UWB ranging, it is possible to perform control that ensures the reliability of digital key operation by BLE. Further, by operating the UWB communication unit 20 at a more appropriate timing, an increase in electrical current consumption in the vehicle 200 may be prevented. Moreover, after the BLE RSSI has been corrected, the accuracy of ranging based on the BLE RSSI is improved. Therefore, instead of UWB ranging, which consumes a large amount of power, it is possible to use Signal Strength Ranging (SSR), which is ranging based on the BLE RSSI, which enables electrical power consumption in the vehicle 200 to be suppressed.

The "BLE communication unit 24" described in the specification corresponds to an "electrical power-saving communication unit", the "UWB communication unit 20" to an "ultra-wideband communication unit", the "ECU 12" to a "control unit", "RSSI" to "signal strength", the "first threshold value" to an "electrical power-saving communication establishment threshold value", and the "second threshold value" to an "operation allowable threshold value".

The processing executed by the CPU reading and executing software (a program) in the above-described exemplary embodiment may be executed by various types of processor other than a CPU. Such processors include programmable logic devices (PLD) that allow circuit configuration to be modified post-manufacture, such as a field-programmable gate array (FPGA), and dedicated electric circuits, these being processors including a circuit configuration that is custom-designed to execute specific processing, such as an application specific integrated circuit (ASIC). The processing may be executed by any one of these various types of processor, or by a combination of two or more of the same type or different types of processor (such as plural FPGAs, or a combination of a CPU and an FPGA). The hardware structure of these various types of processors is, more specifically, an electric circuit combining circuit elements such as semiconductor elements.

In the above-described exemplary embodiment, an aspect in which a program is stored (installed) in advance in the storage device 14 or the like has been explained, there is no limitation thereto. A program may be provided in a format stored on a non-transitory storage medium such as a compact disc read only memory (CD-ROM), a digital versatile disc read only memory (DVD-ROM), or a universal serial bus (USB) memory. Alternatively, a program may be provided in a format downloadable from an external device over a network.

## Claims

1. An information processing device (10), comprising:
an electrical power-saving communication unit (24) configured to perform electrical power-saving communication with a portable information terminal (30);
an ultra-wideband communication unit (20) configured to perform ultra-wideband communication with the portable information terminal (30); and
a control unit (12) that is configured to:
temporarily put the ultra-wideband communication unit (20) into an on state and subsequently into an off state,
correct a signal strength of the electrical power-saving communication received by the electrical power-saving communication unit (24) based on a distance measurement between a vehicle (200) and the portable information terminal (30) calculated from a result of communication by the ultra-wideband communication unit (20),
determine whether the corrected signal strength is equal to or higher than an operation allowable threshold value,
put the ultra-wideband communication unit (20) into an on state and initiate distance measurement between the vehicle (200) and the portable information terminal (30) in response to satisfying a condition that the corrected signal strength is equal to or higher than the operation allowable threshold value, and
enable control of the vehicle (200) so as to perform at least one of locking, unlocking or engine starting of the vehicle (200) in accordance with an operation signal obtained from the portable information terminal (30) via the electrical power-saving communication unit (24).

2. The information processing device (10) recited in claim 1, wherein the control unit (12) is configured to correct the signal strength of the electrical power-saving communication received by the electrical power-saving communication unit (24) to a signal strength corresponding to the distance measurement by the ultra-wideband communication, based on a predetermined correlation between the distance measurement by the ultra-wideband communication unit (20) and the signal strength of the electrical power-saving communication.

3. The information processing device (10) recited in claim 1 or claim 2, wherein the control unit (12) is configured to:
set a number of distance measurement attempts by the ultra-wideband communication unit (20) to zero at a time of initiation of control; and
correct the signal strength of the electrical power-saving communication based on the distance measurement by the ultra-wideband communication unit (20), in a case in which the number of distance measurement attempts does not exceed one, and the signal strength of the electrical power-saving communication received by the electrical power-saving communication unit (24) is equal to or greater than an electrical power-saving communication establishment threshold value, the electrical power-saving communication establishment threshold being lower than the operation allowable threshold value.

4. The information processing device (10) recited in any one of claims 1 to 3, wherein the control unit (12) is configured to correct the signal strength of the electrical power-saving communication each time a connection of the electrical power-saving communication is performed between the vehicle (200) and the portable information terminal (30), and cancel the correction of the signal strength when the connection of the electrical power-saving communication is broken.

5. The information processing device (10) recited in any one of claims 1 to 4, wherein the control unit (12) is configured to, after enabling control of the vehicle (200) so as to perform at least one of locking, unlocking or engine starting of the vehicle (200) by electrical power-saving communication, perform distance measurement between the vehicle (200) and the portable information terminal (30) based on the signal strength of the electrical power-saving communication.

6. The information processing device (10) recited in any one of claims 1 to 5, wherein the ultra-wideband communication unit (20) is temporarily put into an on state and subsequently put into an off state, after the electrical power-saving communication unit (24) and the portable information terminal (30) have established communication.

7. The information processing device (10) recited in any one of claims 1 to 6, wherein the ultra-wideband communication unit (20) is temporarily put into an on state, and subsequently put into an off state after ranging has been complete.

8. An information processing method, comprising:
temporarily putting ultra-wideband communication into an on state and subsequently into an off state,
correcting a signal strength of electrical power-saving communication based on a distance measurement between a vehicle (200) and a portable information terminal (30) calculated from a result of communication by ultra-wideband communication;
determining whether the corrected signal strength is equal to or higher than an operation allowable threshold value,
initiating distance measurement between the vehicle (200) and the portable information terminal (30) by the ultra-wideband communication in response to satisfying a condition that the corrected signal strength is equal to or higher than the operation allowable threshold value; and
enabling control of the vehicle (200) so as to perform at least one of locking, unlocking or engine starting of the vehicle (200) in accordance with an operation signal transmitted from the portable information terminal (30) by the electrical power-saving communication.

9. A non-transitory storage medium storing a program executable by a computer to perform information processing, the information processing comprising:
temporarily putting the ultra-wideband communication unit (20) into an on state and subsequently into an off state,
correcting a signal strength of electrical power-saving communication based on a distance measurement between a vehicle (200) and a portable information terminal (30) calculated from a result of communication by ultra-wideband communication;
determining whether the corrected signal strength is equal to or higher than an operation allowable threshold value,
initiating distance measurement between the vehicle (200) and the portable information terminal (30) by the ultra-wideband communication in response to satisfying a condition that the corrected signal strength is equal to or higher than the operation allowable threshold value; and
enabling control of the vehicle (200) so as to perform at least one of locking, unlocking or engine starting of the vehicle (200) in accordance with an operation signal transmitted from the portable information terminal (30) by the electrical power-saving communication.

## Patentansprüche

1. Informationsverarbeitungsvorrichtung (10), die Folgendes umfasst:
eine Kommunikationseinheit (24) für elektrische Energieeinsparung, die dazu ausgelegt ist, mit einem tragbaren Informationsendgerät (30) eine Kommunikation mit elektrischer Energieeinsparung durchzuführen;
eine Ultrabreitbandkommunikationseinheit (20), die dazu ausgelegt ist, mit dem tragbaren Informationsendgerät (30) eine Ultrabreitbandkommunikation durchzuführen; und
eine Steuereinheit (12), die zu Folgendem ausgelegt ist:
temporäres Bringen der Ultrabreitbandkommunikationseinheit (20) in einen Einzustand und nachfolgend in einen Auszustand,
Korrigieren einer Signalstärke der Kommunikation für elektrische Energieeinsparung, die von der Kommunikationseinheit (24) für elektrische Energieeinsparung empfangen wird, auf Basis einer Abstandsmessung zwischen einem Fahrzeug (200) und dem tragbaren Informationsendgerät (30), die anhand eines Ergebnisses einer Kommunikation durch die Ultrabreitbandkommunikationseinheit (20) berechnet wird,
Bestimmen, ob die korrigierte Signalstärke gleich oder höher ist als ein für einen Betrieb zulässiger Schwellwert,
Bringen der Ultrabreitbandkommunikationseinheit (20) in einen Einzustand und Initiieren einer Abstandsmessung zwischen dem Fahrzeug (200) und dem tragbaren Informationsendgerät (30) in Reaktion darauf, dass eine Bedingung, dass die korrigierte Signalstärke gleich oder höher ist als der für einen Betrieb zulässige Schwellwert, erfüllt ist, und
Ermöglichen einer Steuerung des Fahrzeugs (200), um mindestens eines vom Verriegeln, Entriegeln oder Starten des Motors des Fahrzeugs (200) gemäß einem Betriebssignal durchzuführen, das via die Kommunikationseinheit (24) für elektrische Energieeinsparung vom tragbaren Informationsendgerät (30) erhalten wird.

2. Informationsverarbeitungsvorrichtung (10) nach Anspruch 1, wobei die Steuereinheit (12) dazu ausgelegt ist, auf Basis einer vorbestimmten Korrelation zwischen der Abstandsmessung durch die Ultrabreitbandkommunikationseinheit (20) und der Signalstärke der Kommunikation für elektrische Energieeinsparung die Signalstärke der Kommunikation für elektrische Energieeinsparung, die von der Kommunikationseinheit (24) für elektrische Energieeinsparung empfangen wird, auf eine Signalstärke zu korrigieren, die der Abstandsmessung durch die Ultrabreitbandkommunikation entspricht.

3. Informationsverarbeitungsvorrichtung (10) nach Anspruch 1 oder Anspruch 2, wobei die Steuereinheit (12) zu Folgendem ausgelegt ist:
Einstellen einer Anzahl von Abstandsmessversuchen durch die Ultrabreitbandkommunikationseinheit (20) zu einer Zeit der Initiierung der Steuerung auf null; und
Korrigieren der Signalstärke der Kommunikation für elektrische Energieeinsparung auf Basis der Abstandsmessung durch die Ultrabreitbandkommunikationseinheit (20) in einem Fall, in dem die Anzahl von Abstandsmessversuchen eins nicht überschreitet und die Signalstärke der Kommunikation für elektrische Energieeinsparung, die von der Kommunikationseinheit (24) für elektrische Energieeinsparung empfangen wird, gleich oder größer ist als ein für eine Kommunikation für elektrische Energieeinsparung festgelegter Schwellwert, wobei der für eine Kommunikation für elektrische Energieeinsparung festgelegte Schwellwert kleiner ist als der für einen Betrieb zulässige Schwellwert.

4. Informationsverarbeitungsvorrichtung (10) nach einem der Ansprüche 1 bis 3, wobei die Steuereinheit (12) dazu ausgelegt ist, die Signalstärke der Kommunikation für elektrische Energieeinsparung jedes Mal zu korrigieren, wenn eine Verbindung der Kommunikation für elektrische Energieeinsparung zwischen dem Fahrzeug (200) und dem tragbaren Informationsendgerät (30) durchgeführt wird, und die Korrektur der Signalstärke abzubrechen, wenn die Verbindung der Kommunikation für elektrische Energieeinsparung unterbrochen wird.

5. Informationsverarbeitungsvorrichtung (10) nach einem der Ansprüche 1 bis 4, wobei die Steuereinheit (12) dazu ausgelegt ist, nachdem eine Steuerung des Fahrzeugs (200) zum Durchführen von mindestens einem vom Verriegeln, Entriegeln oder Starten des Motors des Fahrzeugs (200) durch die Kommunikation für elektrische Energieeinsparung ermöglicht wurde, zwischen dem Fahrzeug (200) und dem tragbaren Informationsendgerät (30) auf Basis der Signalstärke der Kommunikation für elektrische Energieeinsparung eine Abstandsmessung durchzuführen.

6. Informationsverarbeitungsvorrichtung (10) nach einem der Ansprüche 1 bis 5, wobei die Ultrabreitbandkommunikationseinheit (20) temporär in einen Einzustand und nachfolgend in einen Auszustand gebracht wird, nachdem die Kommunikationseinheit (24) für elektrische Energieeinsparung und das tragbare Informationsendgerät (30) eine Kommunikation eingerichtet haben.

7. Informationsverarbeitungsvorrichtung (10) nach einem der Ansprüche 1 bis 6, wobei die Ultrabreitbandkommunikationseinheit (20) temporär in einen Einzustand und nachfolgend in einen Auszustand gebracht wird, nachdem eine Entfernungsmessung abgeschlossen wurde.

8. Informationsverarbeitungsverfahren, das Folgendes umfasst:
temporäres Bringen der Ultrabreitbandkommunikation in einen Einzustand und nachfolgend in einen Auszustand,
Korrigieren einer Signalstärke einer Kommunikation für elektrische Energieeinsparung auf Basis einer Abstandsmessung zwischen einem Fahrzeug (200) und einem tragbaren Informationsendgerät (30), die anhand eines Ergebnisses einer Kommunikation durch eine Ultrabreitbandkommunikation berechnet wird;
Bestimmen, ob die korrigierte Signalstärke gleich oder höher ist als ein für einen Betrieb zulässiger Schwellwert,
Initiieren einer Abstandsmessung zwischen dem Fahrzeug (200) und dem tragbaren Informationsendgerät (30) durch die Ultrabreitbandkommunikation in Reaktion darauf, dass eine Bedingung, dass die korrigierte Signalstärke gleich oder höher ist als der für einen Betrieb zulässige Schwellwert, erfüllt ist; und
Ermöglichen einer Steuerung des Fahrzeugs (200), um mindestens eines vom Verriegeln, Entriegeln oder Starten des Motors des Fahrzeugs (200) gemäß einem Betriebssignal durchzuführen, das vom tragbaren Informationsendgerät (30) durch die Kommunikation für elektrische Energieeinsparung übertragen wird.

9. Nichttransitorisches Speichermedium, in dem ein Programm gespeichert ist, das von einem Computer ausführbar ist, um eine Informationsverarbeitung durchzuführen, wobei die Informationsverarbeitung Folgendes umfasst:
temporäres Bringen der Ultrabreitbandkommunikationseinheit (20) in einen Einzustand und nachfolgend in einen Auszustand,
Korrigieren einer Signalstärke einer Kommunikation für elektrische Energieeinsparung auf Basis einer Abstandsmessung zwischen einem Fahrzeug (200) und einem tragbaren Informationsendgerät (30), die anhand eines Ergebnisses einer Kommunikation durch eine Ultrabreitbandkommunikation berechnet wird;
Bestimmen, ob die korrigierte Signalstärke gleich oder höher ist als ein für einen Betrieb zulässiger Schwellwert,
Initiieren einer Abstandsmessung zwischen dem Fahrzeug (200) und dem tragbaren Informationsendgerät (30) durch die Ultrabreitbandkommunikation in Reaktion darauf, dass eine Bedingung, dass die korrigierte Signalstärke gleich oder höher ist als der für einen Betrieb zulässige Schwellwert, erfüllt ist; und
Ermöglichen einer Steuerung des Fahrzeugs (200), um mindestens eines vom Verriegeln, Entriegeln oder Starten des Motors des Fahrzeugs (200) gemäß einem Betriebssignal durchzuführen, das vom tragbaren Informationsendgerät (30) durch die Kommunikation für elektrische Energieeinsparung übertragen wird.

## Revendications

1. Dispositif de traitement de l'information (10), comprenant :
une unité de communication à économie d'énergie électrique (24) configurée pour réaliser une communication à économie d'énergie électrique avec un terminal d'information portable (30) ;
une unité de communication à ultra-large bande (20) configurée pour réaliser une communication à ultra-large bande avec le terminal d'information portable (30) ; et
une unité de commande (12) qui est configurée pour :
mettre temporairement l'unité de communication à ultra-large bande (20) dans un état de marche et ensuite dans un état d'arrêt,
corriger une force du signal de la communication à économie d'énergie électrique reçu par l'unité de communication à économie d'énergie électrique (24) sur la base d'une mesure de distance entre un véhicule (200) et le terminal d'information portable (30) calculée à partir d'un résultat de communication par l'unité de communication à ultra-large bande (20),
déterminer si la force du signal corrigée est égale ou supérieure à une valeur de seuil admissible de fonctionnement,
mettre l'unité de communication à ultra-large bande (20) dans un état de marche et initier une mesure de distance entre le véhicule (200) et le terminal d'information portable (30) en réponse à la satisfaction d'une condition que la force du signal corrigée est égale ou supérieure à la valeur de seuil admissible de fonctionnement, et
permettre une commande du véhicule (200) de façon à réaliser au moins un d'un verrouillage, d'un déverrouillage ou d'un démarrage de moteur du véhicule (200) en fonction d'un signal de fonctionnement obtenu à partir du terminal d'information portable (30) par l'intermédiaire de l'unité de communication à économie d'énergie électrique (24).

2. Dispositif de traitement de l'information (10) selon la revendication 1, dans lequel l'unité de commande (12) est configurée pour corriger la force du signal de la communication à économie d'énergie électrique reçu par l'unité de communication à économie d'énergie électrique (24) à une force du signal correspondant à la mesure de distance par la communication à ultra-large bande, sur la base d'une corrélation prédéterminée entre la mesure de distance par l'unité de communication à ultra-large bande (20) et la force du signal de la communication à économie d'énergie électrique.

3. Dispositif de traitement de l'information (10) selon la revendication 1 ou la revendication 2, dans lequel l'unité de commande (12) est configurée pour :
établir un nombre de tentatives de mesure de distance par l'unité de communication à ultra-large bande (20) à zéro à un moment d'initiation de la commande ; et
corriger la force du signal de la communication à économie d'énergie électrique sur la base de la mesure de distance par l'unité de communication à ultra-large bande (20), dans un cas dans lequel le nombre de tentatives de mesure de distance ne dépasse pas un, et la force du signal de la communication à économie d'énergie électrique reçu par l'unité de communication à économie d'énergie électrique (24) est égale ou supérieure à une valeur de seuil d'établissement de communication à économie d'énergie électrique, le seuil d'établissement de communication à économie d'énergie électrique étant inférieur à la valeur de seuil admissible de fonctionnement.

4. Dispositif de traitement de l'information (10) selon l'une quelconque des revendications 1 à 3, dans lequel l'unité de commande (12) est configurée pour corriger la force du signal de la communication à économie d'énergie électrique chaque fois qu'une connexion de la communication à économie d'énergie électrique est réalisée entre le véhicule (200) et le terminal d'information portable (30), et annuler la correction de la force du signal quand la connexion de la communication à économie d'énergie électrique est interrompue.

5. Dispositif de traitement de l'information (10) selon l'une quelconque des revendications 1 à 4, dans lequel l'unité de commande (12) est configurée pour, après avoir permis une commande du véhicule (200) de façon à réaliser au moins un d'un verrouillage, d'un déverrouillage ou d'un démarrage de moteur du véhicule (200) grâce à une communication à économie d'énergie électrique, réaliser une mesure de distance entre le véhicule (200) et le terminal d'information portable (30) sur la base de la force du signal de la communication à économie d'énergie électrique.

6. Dispositif de traitement de l'information (10) selon l'une quelconque des revendications 1 à 5, dans lequel l'unité de communication à ultra-large bande (20) est temporairement mise dans un état de marche et ensuite mise dans un état d'arrêt, une fois que l'unité de communication à économie d'énergie électrique (24) et le terminal d'information portable (30) ont établi une communication.

7. Dispositif de traitement de l'information (10) selon l'une quelconque des revendications 1 à 6, dans lequel l'unité de communication à ultra-large bande (20) est temporairement mise dans un état de marche, et ensuite mise dans un état d'arrêt une fois que la mesure est terminée.

8. Procédé de traitement de l'information, comprenant :
la mise de manière temporaire de la communication à ultra-large bande dans un état de marche et ensuite dans un état d'arrêt,
la correction d'une force du signal de communication à économie d'énergie électrique sur la base d'une mesure de distance entre un véhicule (200) et un terminal d'information portable (30) calculée à partir d'un résultat de communication par communication à ultra-large bande ;
la détermination du fait que la force du signal corrigée est égale ou supérieure à une valeur de seuil admissible de fonctionnement,
l'initiation d'une mesure de distance entre le véhicule (200) et le terminal d'information portable (30) par la communication à ultra-large bande en réponse à la satisfaction d'une condition que la force du signal corrigée est égale ou supérieure à la valeur de seuil admissible de fonctionnement ; et
la validation d'une commande du véhicule (200) de façon à réaliser au moins un d'un verrouillage, d'un déverrouillage ou d'un démarrage de moteur du véhicule (200) en fonction d'un signal de fonctionnement transmis depuis le terminal d'information portable (30) par la communication à économie d'énergie électrique.

9. Support de stockage non-transitoire stockant un programme exécutable par un ordinateur pour réaliser un traitement de l'information, le traitement de l'information comprenant :
la mise de manière temporaire de l'unité de communication à ultra-large bande (20) dans un état de marche et ensuite dans un état d'arrêt,
la correction d'une force du signal de communication à économie d'énergie électrique sur la base d'une mesure de distance entre un véhicule (200) et un terminal d'information portable (30) calculée à partir d'un résultat de communication par communication à ultra-large bande ;
la détermination du fait que la force du signal corrigée est égale ou supérieure à une valeur de seuil admissible de fonctionnement,
l'initiation de la mesure de distance entre le véhicule (200) et le terminal d'information portable (30) par la communication à ultra-large bande en réponse à la satisfaction d'une condition que la force du signal corrigée est égale ou supérieure à la valeur de seuil admissible de fonctionnement ; et
la validation d'une commande du véhicule (200) de façon à réaliser au moins un d'un verrouillage, d'un déverrouillage ou d'un démarrage de moteur du véhicule (200) en fonction d'un signal de fonctionnement transmis depuis le terminal d'information portable (30) par la communication à économie d'énergie électrique.
